# EUROPEAN PATENT APPLICATION

(11) **EP 2 663 112 A1**
(43) Date of publication of application: **13.11.2013**
(21) Application number: 11854738.9
(22) Date of filing: 07.01.2011
(51) Int. Cl.: H04W 16/14

(54) **METHOD FOR SETTING SUB-FRAMES, MACRO-CELL, MOBILE TERMINAL AND COMMUNICATIONS SYSTEM THEREOF**

(71) Applicant: Fujitsu Limited, Kawasaki-shi, Kanagawa 211-8588 (JP)
(72) Inventor: ZHANG, Yuantao, Beijing 100025 (CN); ZHANG, Yi, Beijing 100025 (CN); ZHOU, Hua, Beijing 100025 (CN); WU, Jianming, Beijing 100025 (CN)
(74) Representative: Stebbing, Timothy Charles
(86) International application number: PCT/CN2011/070078
(87) International publication number: WO 2012/092716

(57) **Abstract**

The present invention relates to a method for setting subframes, a macro base station, a mobile terminal and a communication system. The method for setting subframes in a macro base station comprising: receiving, from a micro base station, information that indicates main carrier and auxiliary carrier used by a mobile terminal at cell edge of the micro base station; and setting limited blank subframes on a carrier corresponding to the auxiliary carrier and used by the macro base station, according to the information; wherein the limited blank subframe is a subframe having a control area which can be used for transmitting control information, and a data area in which only a part of subcarriers can be used for transmitting data.

## Description

### Technical Field

The present invention relates to communication technologies, and particularly, to a carrier aggregation communication technology.

### Background

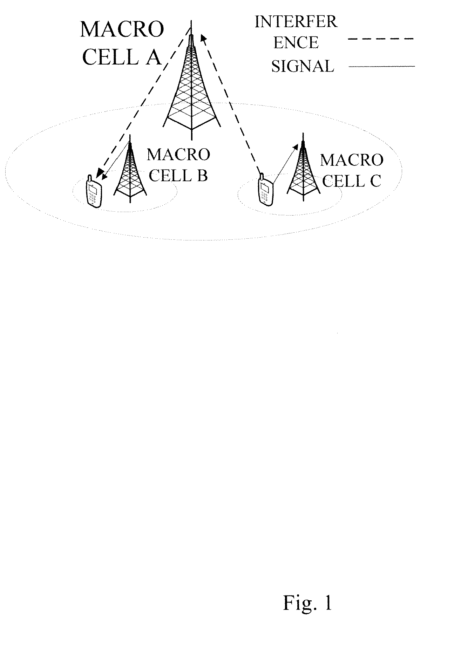

The Long Term Evolution (LTE) of the 3GPP continues to use the traditional homogeneous network which is constructed by a cellular system. In order to further improve the system capacity, the Advanced LTE (LTE-A) of the next generation wireless communication system introduces the heterogeneous network. The LTE-A system may be composed of a macro cell, a femto cell, a pico cell, a Remote Radio Head (RRH) and a relay. By deploying new wireless nodes, the LTE-A system not only improves the system capacity, but also provides better services to the users of special areas and optimizes the system performance. On the other hand, the deployment of the new nodes causes interferences to the users of the originally deployed cells, and even covers some holes. Therefore, an enhanced Inter-Cell Interference Coordination (elCIC) method is required to further optimize the system performance. Fig. 1 is a schematic diagram which schematically illustrates interferences in a heterogeneous network. As illustrated in Fig. 1, in a typical heterogeneous network composed of a macro cell and micro cells (herein a micro cell includes femto cell, pico cell, etc.), as shown by the dotted arrow in the left of the drawing, a mobile terminal served by a micro cell and located at the edge thereof is interfered with by the downlink signal from the macro cell; on the other hand, as shown by the dotted arrow in the right of the drawing, a mobile terminal of the macro cell is also interfered with by the uplink signal from the mobile terminal of the micro cell. Since the micro base station has a small power while the macro base station has a large power, the mobile terminal served by the micro cell and located at the edge thereof being interfered with by the downlink signal from the macro cell is the problem mainly to be solved.

In order to solve the interference from the downlink signal of the macro base station in the heterogeneous network, the LTE-A uses a scheme of Almost Blank Subframe (ABS, hereinafter also referred to as blank subframe). Some subframes are selected from the macro cell and used as the ABS, in which the control signaling that schedules any mobile terminal data transmission is not transmitted, and the data corresponding to any mobile terminal is also not transmitted. In the ABS only some necessary information is transmitted, such as the general pilot signal CRS. In correspondence with the ABS time Location, the micro cell may transmit the control signaling, which schedules data of a User Equipment (UE) in the micro cell, and corresponding data. Thus the interference from the macro cell is suppressed. The ABS locations are interacted through the X2 interface between the macro cell and the micro cell, and one bitmap is used during the interaction. In the drawing, the location corresponding to 0 (or 1) is the conventional subframe, while the location corresponding to 1 (or 0) is the ABS.

In addition, LTE-A Rel.10 adopts the carrier aggregation mode, i.e., being different from Rel.8 where each mobile terminal can only access a pair of uplink and downlink carriers, each physical cell of Rel.10 may have multiple uplink and downlink carriers to be accessed simultaneously by the mobile terminal. The accessed downlink carriers are classified into main carrier and auxiliary carrier, wherein there is only one main carrier, and the others are all auxiliary carriers. In addition, Rel.10 further defines a Cross-Carrier Scheduling (CCS) mode for the mobile terminal, for example, the resource of a carrier allocated to a mobile terminal, and the data transmission mode on the resource, can be scheduled by the control signaling of another carrier.

### Summary

The present invention proposes a solution for eliminating interferences in a communication system of a heterogeneous network which supports carrier aggregation. Based on the ABS solution in Rel.10, the present solution proposes a method for allocating resources on multiple carriers for mobile terminals at the edge of the micro cell. The present invention further proposes information to be interacted between the macro cell and the micro cell, so as to effectively eliminate the interference.

According to one aspect of the present invention, a method for setting subframes in a macro base station is provided, comprising: receiving, from a micro base station, information that indicates main carrier and auxiliary carrier used by a mobile terminal at cell edge of the micro base station; and setting limited blank subframes on a carrier corresponding to the auxiliary carrier and used by the macro base station, according to the information; wherein the limited blank subframe is a subframe having a control area which can be used for transmitting control information, and a data area in which only a part of subcarriers can be used for transmitting data.

According to another aspect of the present invention, a method for setting subframes in a macro base station is provided, comprising: receiving, from a micro base station, information that indicates main carrier used by the micro base station; setting blank subframes on a carrier corresponding to the main carrier and used by the macro base station, according to the information; and setting all or a part of the set blank subframes as partially blank subframes; wherein the blank subframe is a subframe in which both a control area and a data area are almost not used for transmitting information, while the partially blank subframe is a subframe having a control area almost not used for transmitting information, and a data area in which only a part of subcarriers can be used for transmitting data.

According to still another aspect of the present invention, a method for setting subframes in a macro base station is provided, comprising: receiving, from a micro base station, information that indicates main carrier used by mobile terminals at cell edge of the micro base station; judging whether a plurality of main carriers are used by the micro base station according to the information; selecting one or more main carriers from the plurality of main carriers when it is judged that the plurality of main carriers are used by the micro base station; and setting partially blank subframes on a carrier corresponding to the selected main carrier and used by the macro base station; wherein the partially blank subframe is a subframe having a control area almost not used for transmitting information, and a data area in which only a part of subcarriers can be used for transmitting data.

According to yet another aspect of the present invention, a macro base station is provided, comprising: a main and auxiliary carrier information receiving unit configured to receive, from a micro base station, information that indicates main carrier and auxiliary carrier used by the micro base station; and an auxiliary carrier setting unit configured to set limited blank subframes on a carrier corresponding to the auxiliary carrier and used by the macro base station, according to the information; wherein the limited blank subframe is a subframe having a control area which can be used for transmitting information, and a data area in which only a part of subcarriers can be used for transmitting data.

According to further another aspect of the present invention, a mobile terminal is provided, wherein the mobile terminal feeds back channel quality information corresponding limited blank subframes to a micro base station, and the limited corresponding blank subframe is a subframe having a control area almost not used for transmitting control information, and a data area in which only a part of subcarriers can be used for transmitting data.

Features introduced and/or illustrated with respect to one embodiment can be used in one or more other embodiments in a same or similar way, and/or combine with or replace features in other embodiments.

To be noted, the term "include/comprise" or "including/comprising" herein refers to existence of feature, element, step and component, not excluding existence or addition of one or more other features, elements, steps and components or combinations thereof.

### Brief Description of the Drawings

Many aspects of the present invention can be understood better with reference to the following drawings. The parts in the drawings are not drafted in proportion, but just for illustrating the principle of the present invention. For the convenience of illustrating and describing some portions of the present invention, corresponding portions in the drawings may be zoomed in or out. Elements and features described in a drawing or an embodiment of the present invention may be combined with elements and features illustrated in one or more other drawings or embodiments. In addition, the similar reference signs represent corresponding parts in several drawings, and also indicate corresponding parts used in more than one embodiment.
Fig. 1 is a schematic diagram which schematically illustrates interferences in a heterogeneous network;
Fig. 2 illustrates a flowchart of a method for setting subframes in a macro base station according to a first embodiment of the present invention;
Fig. 3 illustrates a schematic diagram of limited blank subframes;
Fig. 4 illustrates a diagram of subframe configuration in a communication system of a first example according to the first embodiment of the present invention;
Fig. 5 illustrates a bitmap of an ABS configuration corresponding to a main carrier in Fig. 4(a);
Fig. 6 illustrates a 10ms bitmap of a limited blank subframe configuration corresponding to an auxiliary carrier in Fig. 4(b);
Fig. 7 illustrates a diagram of subframe configuration in a communication system of a second example according to the first embodiment of the present invention;
Fig. 8 illustrates a bitmap for transmitting PBS set on the main carrier;
Fig. 9 illustrates a flowchart of a method for setting subframes in a macro base station according to a second embodiment of the present invention;
Fig. 10 illustrates a diagram of subframe configuration in a communication system according to a second embodiment of the present invention;
Fig. 11 illustrates a method for setting subframes according to a third embodiment of the present invention;
Fig. 12 illustrates a schematic block diagram of a macro base station according to an embodiment of the present invention;
Fig. 13 illustrates a schematic block diagram of a micro base station according to an embodiment of the present invention;
Fig. 14 illustrates a schematic diagram of a mobile phone used as an example of an UE according to an embodiment of the present invention; and
Fig. 15 illustrates a structure diagram of an UE according to an embodiment of the present invention.

### Description of the Embodiments

The aforementioned and other features of the present invention will be more obvious through the following descriptions with reference to the drawings. The descriptions and the drawings specifically disclose the specific embodiments of the present invention, which are some of the embodiments capable of adopting the principle of the present invention. To be noted, the present invention is not limited to the described embodiments. On the contrary, the present invention includes any amendment, modification and their equivalents falling in the scope of the accompanied claims.

### The first embodiment

In the first embodiment, the mobile terminals (UEs) at the edge of the micro cell are classified into two types:
1) only capable of accessing f1; for the convenience of description, f1 is also referred to as the main carrier of such type of mobile terminals; and
2) capable of accessing f1 and f2, and the UEs are all configured in the mode of main carrier f1 and auxiliary carrier f2.

For the convenience of description, a main carrier used by the mobile terminal at the edge of the micro cell where the micro base station is located sometimes is referred to as the main carrier used by the micro base station, and an auxiliary carrier used by the mobile terminal at the edge of the micro cell where the micro base station is located sometimes is referred to as the auxiliary carrier used by the micro base station.

The first embodiment is applicable to the situation where some carriers (e.g., f2) are only used as the auxiliary carriers rather than the main carriers.

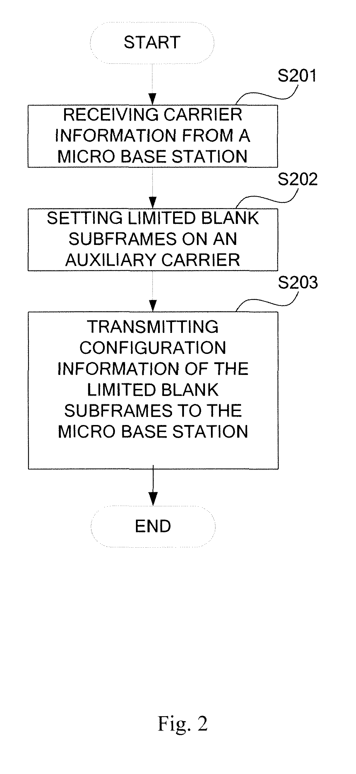

Fig. 2 illustrates a flowchart of a method for setting subframes in a macro base station according to a first embodiment of the present invention.

As illustrated in Fig. 2, firstly in step S201, the macro base station receives information of the auxiliary carrier from the micro base station. The information of the auxiliary carrier may be received from the micro base station in various ways. For example, the information of the auxiliary carrier used by the UE at the edge of the micro cell may be directly received from the micro base station through a wired or wireless link, or the information of the main carrier used by the UE at the edge of the micro cell may be firstly received from the micro base station, and then the information of the auxiliary carrier may be determined according to the received information of the main carrier.

Next, in step S202, the macro base station sets a carrier corresponding to the auxiliary carrier and used in the macro cell. For the convenience of description, the carrier corresponding to the auxiliary carrier and used in the macro cell is also referred to as the auxiliary carrier (they are actually in the same frequency range). In the embodiment, the limited blank subframes are set in the auxiliary carrier.

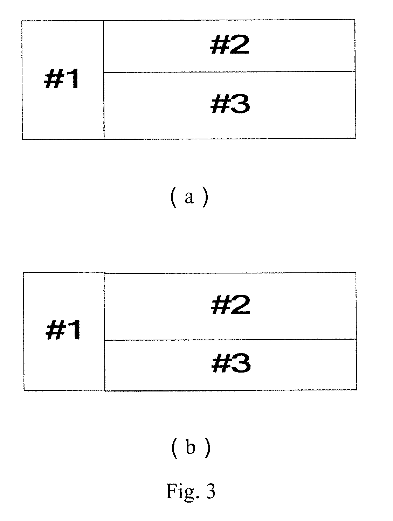

Fig. 3 illustrates a schematic diagram of limited blank subframes. Herein the limited blank subframe is a subframe having a control area which can be used for transmitting control information, and a data area in which only a part of subcarriers can be used for transmitting data.

The shaded area in the drawings indicates that an information transmission can be performed therein. That is, the macro base station may use the shaded area to transmit information to a UE served by the macro cell. In a configuration of the limited blank subframe as illustrated in Fig. 3(a), the control area (control channel) #1 may be used for transmitting control information; in the data area, #2 may be used by the macro base station for transmitting data information; while #3 cannot be used by the macro base station for transmitting data information. In a configuration of the limited blank subframe as illustrated in Fig. 3(b), the control area (control channel) #1 may be used for transmitting control information; in the data area, data channel #3 may be used by the macro base station for transmitting data information; while data channel #2 cannot be used by the macro base station for transmitting data information. The size and location of the portion for transmitting data information can be set more flexibly.

In step S203, the macro base station transmits configuration information of the limited blank subframe to the micro base station. The configuration information of the limited blank subframe may include the location (e.g., subframe number) of the limited blank subframe, the range of the data channel which can be used by the macro base station for transmitting data (e.g., #2 in Fig. 3 (a) and #3 in Fig. 3 (b)), and/or the range of the data channel which cannot be used by the macro base station for transmitting data (e.g., #3 in Fig. 3 (a) and #2 in Fig. 3 (b)). To be noted, for the range of the data channel which can be used by the macro base station for transmitting data (e.g., #2 in Fig. 3 (a) and #3 in Fig. 3 (b)), and/or the range of the data channel which cannot be used by the macro base station for transmitting data (e.g., #3 in Fig. 3 (a) and #2 in Fig. 3 (b)) in the limited subcarrier, they can be negotiated between the macro base station and the micro base station in advance, so as to reduce the information transmission amount.

The micro base station may transmit data to the UE in the micro cell through the data channel in the limited blank subframe which cannot be used by the macro base station for transmitting data, wherein the mobile terminal at the cell edge is preferably scheduled.

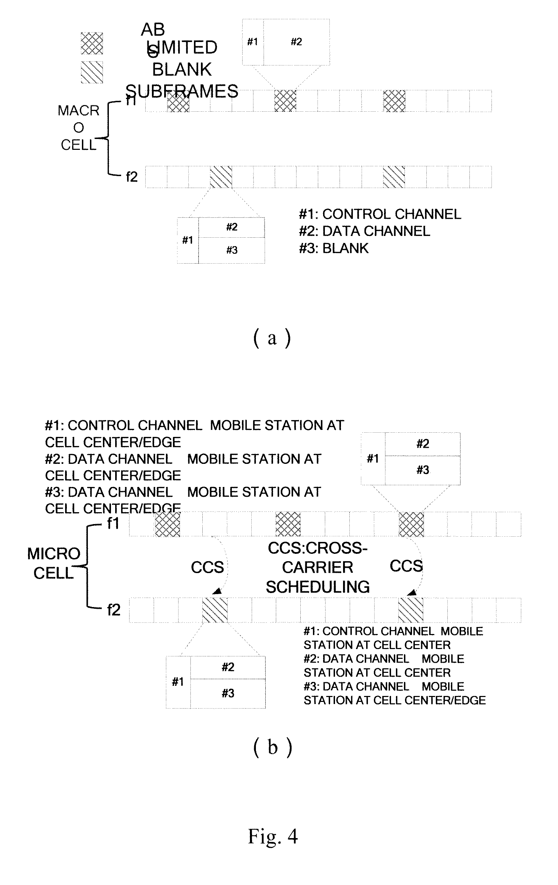

Fig. 4 illustrates a diagram of subframe configuration in a communication system of a first example according to the first embodiment of the present invention, wherein Fig. 4 (a) gives a subframe configuration in the macro cell.

As illustrated in Fig. 4 (a), after the carrier information is received from the micro base station, the main carrier and the auxiliary carrier are set at the macro base station. Specifically, on carrier f1 (corresponding to the main carrier of the mobile terminal at cell edge of the micro cell) some subframes are configured as ABS in the existing ABS configuration mode.

The auxiliary carrier is set before, during or after the setting of the main carrier.

Specifically, on carrier f2 (corresponding to the auxiliary carrier used by the mobile terminal at cell edge of the micro cell), some subframes may be configured as limited blank subframes which can be scheduled by the mobile terminal at cell edge of the micro cell. In the subframe configurations as illustrated in Fig. 4, area #3 is a resource which can be scheduled by the mobile terminal at cell edge of the micro cell (i.e., the data channel will not be used by the macro base station for transmitting data information). The locations of the subframes need to be interacted between the macro cell and the micro cell through the X2 interface for example in the bitmap mode. In addition, corresponding resource division on those subframes also needs an interaction.

In order to meet the requirement of uplink synchronous HARQ of the mobile terminal of the micro cell, the LTE-A FDD system uses a bitmap of 40ms (40 subframes, corresponding to 40 bits). The bitmap of 40ms is used for the following reason: assuming that the mobile terminal of the micro cell transmits a data packet in uplink subframe n and the micro base station transmits, in downlink subframe n+4, a response signal ACK/NACKfor the mobile terminal. If response signal is NACK, then the mobile terminal transmits retransmission data in subframe n+8, and if the retransmission data is still incorrect, the mobile terminal transmits retransmission packet in subframe n+12, and so on. In order to ensure that the mobile terminal correctly receives the response signal, subframes n+4, n+12, etc. of the macro cell shall be set as the ABS. The repetition appears every 40ms. In addition, the system may also configure other subframes as the ABS.

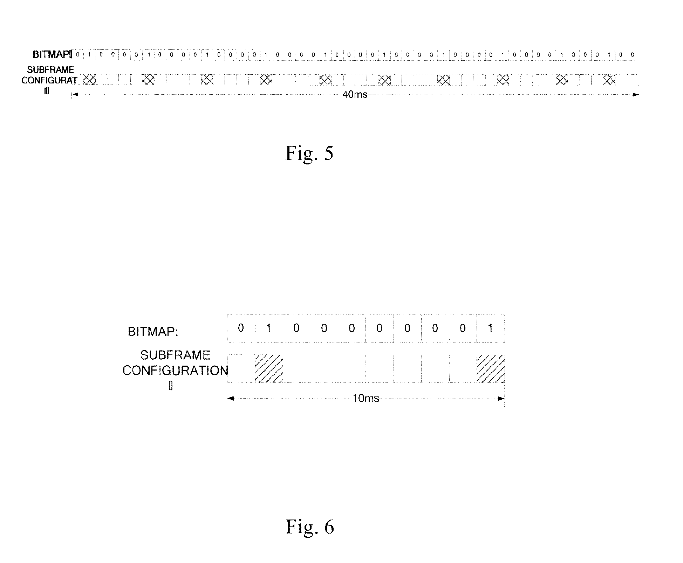

Fig. 5 illustrates a bitmap of an ABS configuration corresponding to a main carrier in Fig. 4(a). On the other hand, since mobile terminals at cell edge of the micro cell are configured in a CCS mode, those mobile terminals transmit a response signal in the downlink main carrier after transmitting data in the uplink carrier. Thus on the auxiliary carrier corresponding to the mobile terminals at cell edge, it does not need an interaction of locations of the limited blank subframes in the time of 40ms. According to the present invention, preferably, configuration information of the limited blank subframe set on auxiliary carrier f2 may be transmitted using a 10ms bitmap. The 10ms bitmap indicates that the bitmap has a length of 10 ms, and each bit specifies whether each subframe in a 10ms frame is configured as a limited blank subframe. The 40ms bitmap indicates that the bitmap has a length of 40 ms, and each bit specifies whether each subframe in a 40ms frame is configured as a limited blank subframe. Fig. 6 illustrates a 10ms bitmap of a limited blank subframe configuration corresponding to an auxiliary carrier in Fig. 4 (b).

To be noted, although the drawing only illustrates three blank subframes and two limited blank subframes, the present invention is not limited thereto, and there may be more or less blank subframes and limited blank subframes.

Fig. 4 (b) illustrates the subframe configuration in the micro cell. After receiving the configuration information of the blank subframe and the limited blank subframe from the macro base station, the micro base station set the carriers. On f1, data is only transmitted through corresponding ABS to the mobile terminal at cell edge. When the macro base station is set as illustrated in Fig. 4 (a), the 2^{nd} , 7^{th} and 12^{th} subframes in f1 may be scheduled to the mobile terminal at cell edge of the micro cell. On f2, a time-frequency location corresponding to time-frequency location of corresponding macro cell which may be scheduled by the mobile terminal at cell edge of the micro cell(i.e., a location corresponding to area #3 of the limited blank subframe) can be scheduled to the mobile terminal at cell edge of the micro cell. For example, as illustrated in Fig. 4 (a), the micro base station may schedule areas #3 of the 4^{th} and 12^{th} subframes to the mobile terminal at cell edge of the micro cell.

In addition, in a location in area #3 of corresponding limited blank subframe on micro cell f2, since the mobile terminal of the micro cell is not interfered with by the macro cell, the channel quality of the mobile terminal of the micro cell at this location may be obviously distinguished from the channel quality at other location. For this reason, subframes on f2 are classified into two types, wherein
1) the first type of subframes are customarily employed subframes; and
2) the second type of subframes are corresponding to the limited blank subframes, and also referred to as limited corresponding blank subframes. Such a subframe has an area corresponding to a null data area (e.g., area #3 in Fig. 4(a)) in the limited blank subframe set by the macro base station on f2 and can be used for transmitting data, and an area corresponding to a non-null area (e.g., areas #1 and #2 in Fig. 4(a)) in the limited blank subframe and almost not used for transmitting information.

In a preferred embodiment, the mobile terminal at cell edge of the micro cell feeds back channel qualities of the two types of subframes. The upper layer (the layer above the physical layer, such as the RRC layer) configures the type of the subframe whose channel quality is to be fed back by a certain mobile terminal. If the channel quality of the second type of subframe is to be fed back, preferably the channel quality of corresponding area #3 is only fed back. The channel quality for example may be Channel Quality Information (CQI), Precoding Matrix Information (PMI), Rank Information (RI), etc.

In a preferred embodiment, the mobile terminal at cell edge of the micro cell is configured in a CCS mode, i.e., the micro base station schedules data in auxiliary carrier f2 through main carrier f1.

According to the embodiment of the present invention, the interference with the mobile terminal at cell edge of the micro cell can be reduced or eliminated, the scheduling of the micro cell can be more flexible, and the macro base station will not be changed too much.

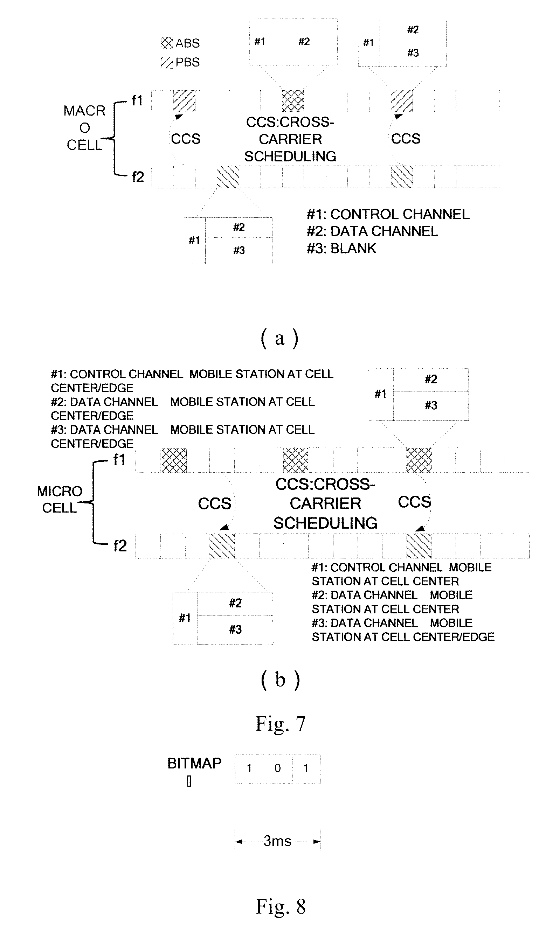

Fig. 7 illustrates a diagram of subframe configuration in a communication system of a second example according to the first embodiment of the present invention, wherein Fig. 7 (a) gives a subframe configuration in the macro cell.

As illustrated in Fig. 7 (a), after the carrier information is received from the micro base station, the main carrier and the auxiliary carrier are set at the macro base station. Specifically, on carrier f1 (corresponding to the main carrier used by the mobile terminal at cell edge of the micro cell) some subframes are configured as ABS in the existing ABS configuration mode. Next, all or a part of the ABS are further configured as partially blank subframes (PBS). Thus, according to the embodiment of the present invention, the PBS having been set becomes a subset of the ABS. In the present invention, the PBS is a subframe having a control area almost not used for transmitting control information, and a data area in which only a part of subcarriers can be used for transmitting data. As illustrated in Fig. 7 (a), a part of the time-frequency resources of the PBS (e.g., shaded area #2 in the drawing) can be used for scheduling the mobile terminal having a main carrier f2 and an auxiliary carrier f1 in the macro cell. In one embodiment, since the control section #1 almost does not transmit the control signal in the PBS (only the pilot is partially transmitted), the macro base station can schedule through the data area #2 on f1 through f2 in the macro cell, i.e., the CCS mode is employed.

By setting the PBS, the scheduling flexibility of the macro cell can be increased, and the spectral efficiency can be improved. In addition, the information transmission amount between the macro cell and the micro cell can be reduced by setting the PBS location as a subset of the ABS locations.

Fig. 8 illustrates a bitmap for transmitting PBS set on f1. The bitmap is used in coordination with that illustrated in Fig. 5. That is, in a situation where two PBS are set in every three ABS illustrated in Fig. 7a for the ABS configuration in Fig. 5, the conventional 40ms bitmap may be transmitted to indicate the ABS location. Next, or at the same time, a 3ms bitmap may be transmitted to indicate the PBS location. As the PBS is a subset of the ABS, the micro base station can determine the PBS location according to the 3ms bitmap.

The macro base station sets the auxiliary carrier before, during or after the setting of the main carrier.

Specifically, on f2 (corresponding to the auxiliary carrier used by the mobile terminal at cell edge of the micro cell), some subframes may be configured as limited blank subframes which can be scheduled by the mobile terminal at cell edge of the micro cell. In the subframe configurations as illustrated in the drawing, area #3 is a resource which can be scheduled by the mobile terminal at cell edge of the micro cell (i.e., the data channel will not be used by the macro base station for transmitting data information). The locations of the subframes need to be interacted between the macro cell and the micro cell through the X2 interface for example in the bitmap mode. In addition, corresponding resource division on those subframes also needs an interaction.

To be noted, although the drawing only illustrates three blank subframes and two limited blank subframes, the present invention is not limited thereto, and there may be more or less blank subframes and limited blank subframes.

Fig. 7 (b) illustrates the subframe configuration in the micro cell. On f1, data is only transmitted through the location of corresponding ABS or PBS to the mobile terminal at cell edge, and the location for that data transmission is not conflicted with the location for macro cell data transmission. As illustrated in Fig. 7 (b), in corresponding macro cell PBS, area #2 cannot be scheduled to the mobile terminal at the cell edge, but to the mobile terminal at the cell center, while area #3 can be scheduled to the mobile terminals at both the cell edge and the cell center.

On f2, a time-frequency location corresponding to time-frequency location of corresponding macro cell which may be scheduled by the mobile terminal at cell edge of the micro cell (i.e., a location corresponding to area #3 of the limited blank subframe) can be scheduled to the mobile terminal at cell edge of the micro cell. For example, when the subframes in the macro cell are configured as illustrated in Fig. 7 (a), areas #3 of the 4^{th} and 12^{th} subframes of f2 may be scheduled to the mobile terminal at cell edge of the micro cell.

In a preferred embodiment, the mobile terminal of that type is configured in CCS mode, i.e., the micro base station schedules data in auxiliary carrier f2 through main carrier f1.

The second embodiment

In the second embodiment, edge users of the micro cell are classified into four types:
1) only capable of accessing f1; for the convenience of description, f1 is referred to as the main carrier of such type of mobile terminals;
2) only capable of accessing f2; for the convenience of description, f2 is referred to as the main carrier of such type of mobile terminals;
3) capable of accessing f1 and f2, and the UEs are configured in the mode of main carrier f1 and auxiliary carrier f2; and
4) capable of accessing f1 and f2, and the UEs are configured in the mode of main carrier f2 and auxiliary carrier f1.

The second embodiment is applicable to the situation where the micro cell has at least two carriers which may be used as the main carriers.

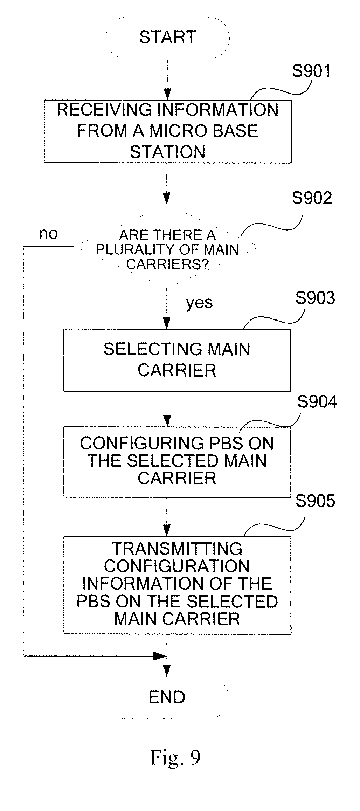

Fig. 9 illustrates a flowchart of a method for setting subframes in a macro base station according to a second embodiment of the present invention.

As illustrated in Fig. 9, firstly in step S901, the macro base station receives information of a main carrier from the micro base stations.

Next, in step S902, the macro base station determines whether mobile terminals at cell edge of a micro cell are configured with any different main carrier.

When it is determined in step S902 that the mobile terminals at cell edge of the micro cell are only configured with the same main carrier (i.e., there is a single main carrier), the processing is ended. On the other hand, when it is determined in step S902 that the mobile terminals at cell edge of the micro cell are configured with different main carrier, then in step S903, the macro base station selects one or more main carriers from the main carriers. Preferably, a carrier serving as both the main carrier and the auxiliary carrier may be selected. When multiple such carriers are available, one or more main carriers may be selected according to the ascending or descending order of the frequency ranges, or may be selected randomly.

Next, in step S904, the macro base station sets a carrier corresponding to the selected main carrier and used in the macro cell. For the convenience of description, the carrier corresponding to the main carrier and used in the macro cell is also referred to as the main carrier (they are actually in the same frequency range). In the embodiment, the PBS rather than the blank subframes are set in the auxiliary carrier.

Finally, in step S905, the macro base station transmits the configuration information of the PBS set on the selected main carrier to the micro base station. The configuration information may include a location (e.g., subframe number) of the PBS, a range of the data channel which can be used by the macro base station for transmitting data and/or a range of the data channel which cannot be used by the macro base station for transmitting data.

The micro base station may transmit data to the UE at the edge of the micro cell through the data channel in the PBS which cannot be used by the macro base station for transmitting data.

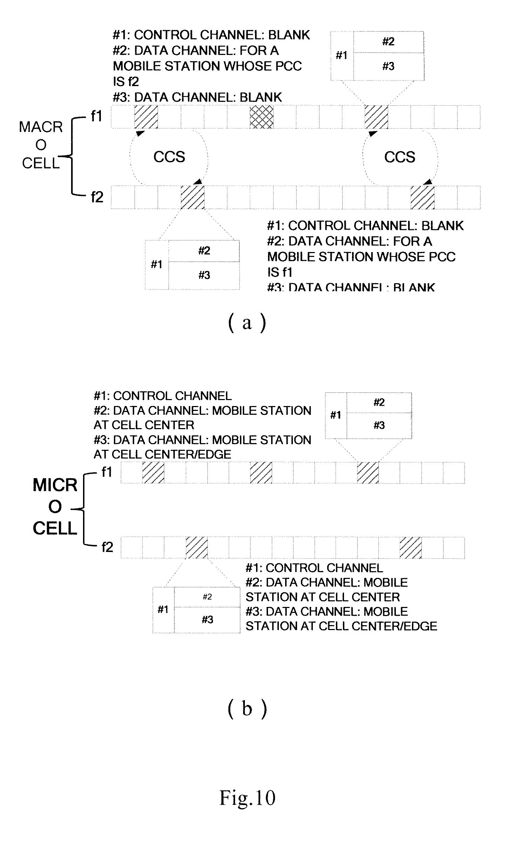

Fig. 10 illustrates a diagram of subframe configuration in a communication system according to a second embodiment of the present invention, wherein Fig. 10 (a) gives a subframe configuration in the macro cell.

As illustrated in Fig. 10 (a), f2 is the selected main carrier. The setting of f1 is the same as the situation illustrated in Fig. 7 (a), and herein is omitted. For f2, some subframes are set as the PBS.

To be noted, although in the embodiment both the blank subframes and the PBS are set in the setting of f1, the present invention is not limited thereto. The PBS may be not set in f1, and only some subframes are set as the blank subframes, as illustrated in Fig. 4 (a).

When the ABS/PBS on macro cell f1 and the PBS on f2 are configured separately, in order to perform a CCS, the PBS on f2 shall not be aligned with the ABS/PBS on f1, i.e., the ABS/PBS cannot be at a location on f1 which is corresponding to the PBS on f2.

In addition, the PBS location on f1/f2 may be obtained by applying an offset to the PBS location on f2/f1. In this way, the PBS location on a certain carrier may be firstly interacted between the macro cell and the micro cell, and then an offset required for obtaining the PBS location on another carrier is interacted.

As illustrated in Fig. 10 (a), in the macro cell, if the subframe on carrier f1 is a PBS and corresponding subframe on carrier f2 is an ordinary subframe, the PBS may be used to schedule a mobile terminal of the macro cell where the main carrier is f2 and the auxiliary carrier is f1. In addition, the mobile terminal is configured in the CCS mode. For example, resource #2 of the PBS on f1 in Fig. 10 (a) may be scheduled. If the subframe on carrier f2 is a PBS and corresponding subframe on carrier f1 is an ordinary subframe, the PBS may be used to schedule a mobile terminal where the main carrier of the macro cell is f1 and the auxiliary carrier is f2. In addition, the mobile terminal is configured in the CCS mode. For example, resource #2 of the PBS on f2 may be scheduled.

Fig. 10 (b) gives a subframe configuration in the micro cell. When carriers f1 and f2 correspond to the ABS and the PBS of the macro cell, the UE at the cell edge may be scheduled. In the subframe corresponding to the PBS of the macro cell, area #2 can only be used to schedule the data transmission of the mobile terminal at the cell center, while area #3 can be used to schedule the data transmission of the mobile terminals at both the cell edge and the cell center.

Although the system supporting both carriers is taken as example for the convenience of description, the embodiments of the present invention are applicable to more carriers. In addition, the first and second embodiments of the present invention may be combined.

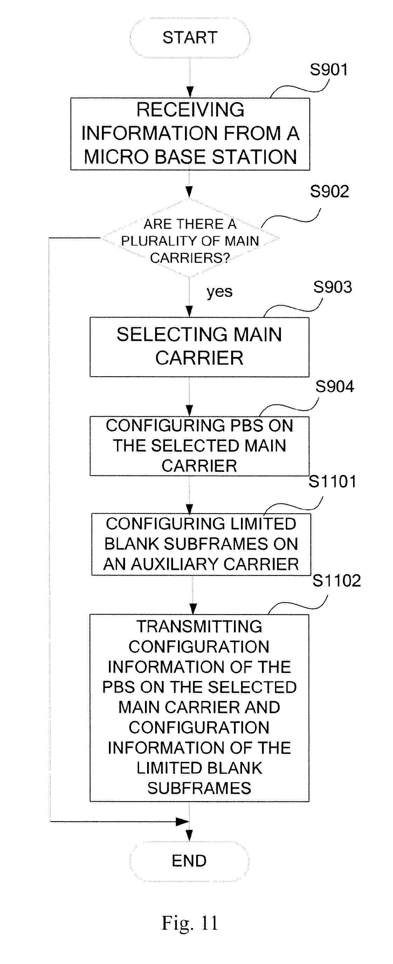

Fig. 11 illustrates a method for setting subframes according to a third embodiment of the present invention.

As illustrated in Fig. 11, when a plurality of UEs at the edge of the micro cell use two or more main carriers and one or more auxiliary carriers, the PBS may be set on the selected main carriers (see steps S901 to 904), the limited blank subframes may be set on the auxiliary carrier, and the configuration information of the set PBS and limited blank subframes may be transmitted to the micro base station (see steps S1101 to S1102).

For the main carriers unselected, the blank subframes may be set as illustrated in Fig. 4(a), or both the blank subframes and the PBS may be set as illustrated in Fig. 7(a).

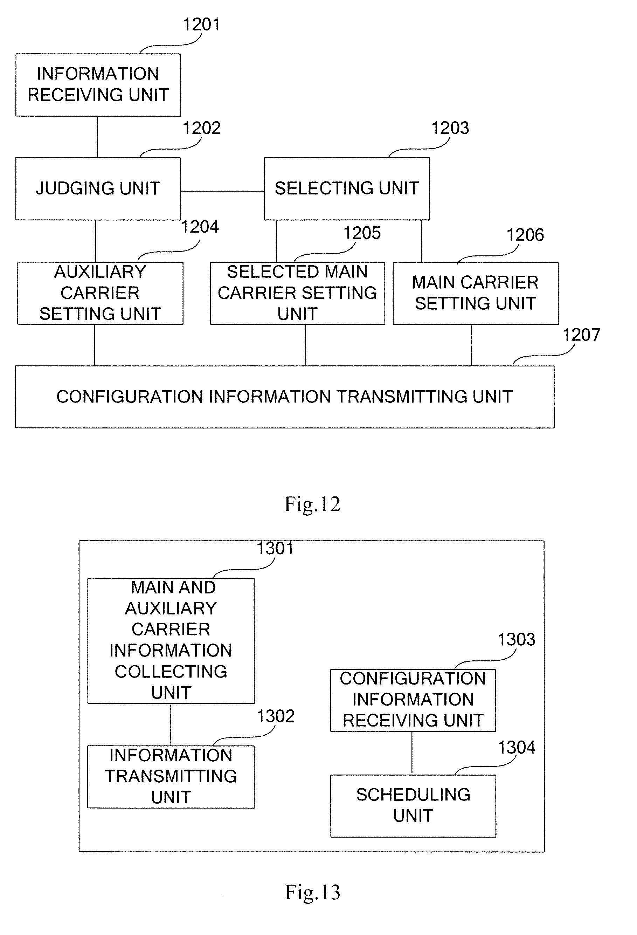

Fig. 12 illustrates a schematic block diagram of a macro base station according to an embodiment of the present invention. As illustrated in Fig. 12, the macro base station according to the present invention includes an information receiving unit 1201, a judging unit 1202, a selecting unit 1203, an auxiliary carrier setting unit 1204, a selected main carrier setting unit 1205, a main carrier setting unit 1206, and a configuration information transmitting unit 1207.

The information receiving unit 1201 receives, from a micro base station, information that indicates main carrier and auxiliary carrier used by a mobile terminal at cell edge of the micro base station. The judging unit 1202 judges whether there are a plurality of main carriers according to the received information, and if so, the selecting unit 1203 selects one or more main carriers from the plurality of main carriers. The selected main carrier setting unit 1205 sets the selected main carrier, i.e., sets the PBS in the selected main carrier. Simultaneously or subsequently, the auxiliary carrier setting unit 1204 sets the limited blank subframes on the auxiliary carrier, and the main carrier setting unit 1206 sets the blank subframes and/or the PBS on the main carrier. The configuration information transmitting unit 1207 transmits, to the micro base station, the configuration information of the blank subframes and/or the PBS set on the main carrier, the configuration information of the PBS set on the selected main carrier, and the configuration information of the limited blank subframes set on the auxiliary carrier.

Obviously, some of the above units may be omitted, such as the judging unit 1202, the selecting unit 1203, and the selected main carrier setting unit 1205. In that case, all the main carriers are set by the main carrier setting unit 1206.

In other embodiment, (the auxiliary carrier setting unit) may further sets the blank subframes/PBS on the auxiliary carrier.

Fig. 13 is a schematic block diagram which illustrates a micro base station according to an embodiment of the present invention.

As illustrated in Fig. 13, the micro base station according to an embodiment of the present invention includes a main and auxiliary carrier information collecting unit 1301, an information transmitting unit 1302, a configuration information receiving unit 1303 and a scheduling unit 1304.

The main and auxiliary carrier information collecting unit 1301 collects information of main carrier and auxiliary carrier used by an UE at the edge of a micro cell served by the micro base station. The information transmitting unit 1302 transmits the information of the main carrier and the auxiliary carrier collected by the main and auxiliary carrier information collecting unit 1301 to the macro base station. In one embodiment, the information is collated before being transmitted to the macro base station. The configuration information receiving unit 1303 collects, from the macro base station, information of blank subframes/ PBS set on the main carrier, configuration information of PBS set on the selected auxiliary and configuration information of limited blank subframes set on the auxiliary carrier. The scheduling unit 1304 schedules the resource of the micro base station according to the information received by the configuration information receiving unit 1303.

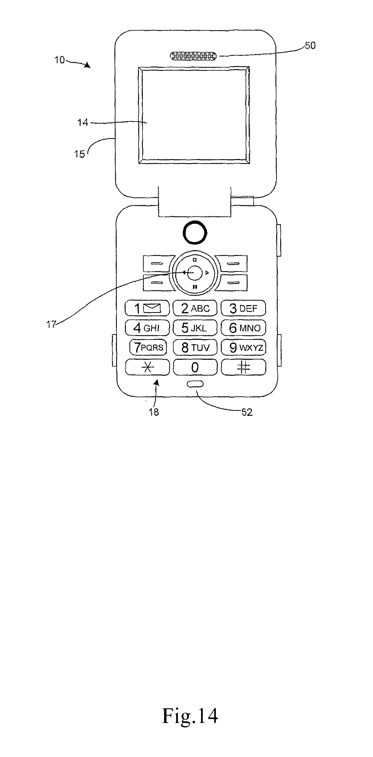

Fig. 14 is a schematic diagram which illustrates a mobile phone used as an example of an UE according to an embodiment of the present invention. As illustrated in Fig. 14, the mobile phone 10 may be a flip phone having a cover 15 movable between an open position and a closed position. In Fig. 14, the cover 15 is illustrated as being located at the open position. It shall be appreciated that the mobile phone 10 may be other structure such as a bar phone or a slide phone

The mobile phone 10 may include a display 14 that displays information such as operating state, time, telephone number, telephone directory, menus, etc. to the user, so that the user can utilize various features of the electronic device 10. The display 14 may be further configured to visually display the content received by the electronic device 10 and/or retrieved from a memory (not illustrated) of the mobile phone 10. The display 14 may be configured to present images, videos and other graphics (e.g., photos, mobile TV programs and game-related videos) to the user.

A keypad 18 provides multiple user input operations. For example, the keypad 18 may include alphanumeric keys that allow alphanumerical information (e.g., telephone number, telephone list, telephone directory, notepad, text, etc.) to be input. In addition, the keypad 18 may include specific function keys 17, such as a "call send" key for initiating or answering a phone call, and a "call end" key for ending or hanging up the phone call. The specific function keys may further include a menu navigation key and a selection key which conveniently perform navigation through menus displayed on the display 14. For example, a pointing device and/or a navigation key may be provided to receive a directional input from the user. In addition, the display 14 and the keypad 18 may be used in combination to realize the soft key function. The mobile phone 10 further includes parts essential for realizing its functions, such as an antenna, a microcontroller, a speaker 50 and a microphone 52.

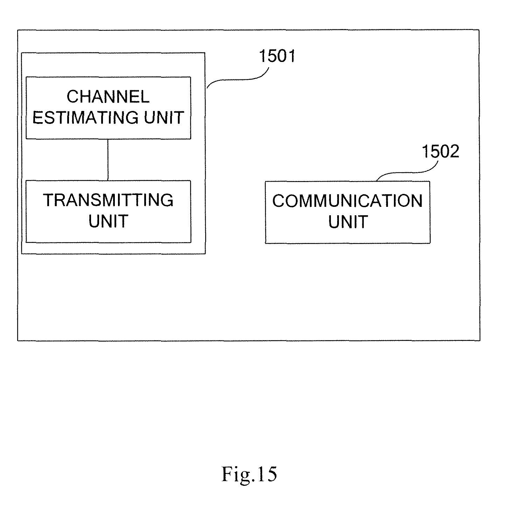

Fig. 15 illustrates a structure diagram of an UE according to an embodiment of the present invention. As illustrated in Fig. 15, the UE according to an embodiment of the present invention includes a feedback unit 1501 and a communication unit 1502. In which, the feedback unit 1501 includes a channel estimating unit and a transmitting unit. The communication unit 1502 communicates with a micro base station by using the main carrier and the auxiliary carrier when being served at cell edge of the micro base station.

In the present invention, when being located at the edge of the micro cell, the UE (also referred to as the mobile terminal) feeds back channel quality information for limited corresponding blank subframes to the micro base station, and the limited corresponding blank subframe is a subframe having a control area almost not used for transmitting control information, and a data area in which only a part of subcarriers can be used for transmitting data. The limited corresponding blank subframe is a subframe used by the micro base station, and it is corresponding to the limited blank subframe used by the macro base station. In that case, the channel estimating unit of the feedback unit 1501 of the mobile terminal UE estimates the channel quality of the limited corresponding blank subframe, and the transmitting unit of the feedback unit 1501 transmits channel quality information of the limited corresponding blank subframe to the base station.

In a preferred embodiment, the UE only transmits to the micro base station channel quality information for the data transmission subcarriers of the limited corresponding blank subframes. For example, when the macro base station sets f2 as illustrated in Fig. 4 (a) and only area#3 of the subframe from the micro base station can be used for data transmission, the channel estimating unit of the feedback unit of the mobile terminal UE only estimates the channel quality of area #3, and the transmitting unit in the feedback unit only transmits the channel quality information for area #3 to the base station. To be noted, even if the subframe is scheduled to the UE at the center of the micro cell, the UE at the edge of the micro cell can also estimate and feed back the channel quality of the subfame.

To be noted, although the transmitting unit and the communication unit are illustrated separately for the convenience of description, it shall be appreciated that the transmitting unit may be a part of the communication unit.

The terms in the present invention are selected for clearly describing the present invention, rather than making limitations thereto. In addition, the terms in the present invention shall be construed by a person skilled in the art according to the actual usage condition in the language environment of this field, rather than just being explained literally or too ideally. For example, the blank subframe in the present invention shall not be construed as a subframe that does not transmit any information.

The above devices and methods of the present invention may be implemented by hardware, or a combination of hardware and software. The present invention further relates to a logic part readable program which when being executed by a logic part, enables the logic part to implement the aforementioned device or constituent parts, or enables the logic part to implement the aforementioned methods or steps. The logic part for example may be a field programmable logic part, a microprocessor, a computer processor, etc. The present invention further relates to a storage medium for storing the above program, such as hard disc, magnetic disc, optical disc, DVD, flash, magnetic optical disc, memory card, memory stick, etc.

The present invention is described above with reference to the specific embodiments, but a person skilled in the art shall appreciate that those descriptions are just exemplary, rather than limitations to the protection scope of the present invention. A person skilled in the art can make various modifications and changes to the present invention according to the spirit and principle of the present invention, and those modifications and changes also fall within the scope of the present invention.

## Claims

1. A method for setting subframes in a macro base station, comprising:
receiving, from a micro base station, information that indicates main carrier and auxiliary carrier used by a mobile terminal at cell edge of the micro base station; and
setting limited blank subframes on a carrier corresponding to the auxiliary carrier and used by the macro base station, according to the information;
wherein the limited blank subframe is a subframe having a control area which can be used for transmitting control information, and a data area in which only a part of subcarriers can be used for transmitting data.

2. The method according to claim 1, further comprising:
judging whether mobile terminals at cell edge of the micro base station use a plurality of main carriers according to the information received from the micro base station;
selecting one or more main carriers from the plurality of main carriers when the plurality of main carriers are used; and
setting, by the macro base station, a part of subframs on the selected one or more main carriers as partially blank subframes,
the partially blank subframe is a subframe having a control area almost not used for transmitting control information, and a data area in which only a part of subcarriers can be used for transmitting data.

3. The method according to claim 1, further comprising:
transmitting, by the macro base station, configuration information of the limited blank subframe to the micro base station through a bitmap.

4. The method according to claim 3, wherein the bitmap has a length of 10 bits, and each bit specifies whether each subframe in a 10ms frame is configured as a limited blank subframe.

5. The method according to claim 1, further comprising:
setting, by the macro base station, blank subframes on a carrier corresponding to the main carrier and used by the macro base station;
the blank subframe is a subframe in which both a control area and a data area are almost not used for transmitting information.

6. The method according to claim 5, further comprising:
setting, by the macro base station, all or a part of the set blank subframes as partially blank subframes,
the partially blank subframe is a subframe having a control area almost not used for transmitting control information, and a data area in which only a part of subcarriers can be used for transmitting data.

7. The method according to claim 6, wherein the blank subframe and the limited blank subframe are spaced apart from each other for several subcarriers in time.

8. The method according to claim 6, wherein the macro base station schedules the partially blank subframe through the carrier corresponding to the auxiliary carrier.

9. A method for setting subframes in a macro base station, comprising:
receiving, from a micro base station, information that indicates main carrier used by a mobile terminal at cell edge of the micro base station;
setting blank subframes on a carrier corresponding to the main carrier and used by the macro base station, according to the information; and
setting all or a part of the set blank subframes as partially blank subframes,
wherein the blank subframe is a subframe in which both a control area and a data area are almost not used for transmitting information, while the partially blank subframe is a subframe having a control area almost not used for transmitting information, and a data area in which only a part of subcarriers can be used for transmitting data.

10. The method according to claim 9, wherein the macro base station schedules the partially blank subframe of the main carrier through the auxiliary carrier.

11. A method for setting subframes in a macro base station, comprising:
receiving, from a micro base station, information that indicates main carrier used by mobile terminals at cell edge of the micro base station;
judging whether the mobile terminals at cell edge of the micro base station use a plurality of main carriers according to the information;
selecting one or more main carriers from the plurality of main carriers when it is judged that the plurality of main carriers are used by the mobile terminals at cell edge of the micro base station; and
setting partially blank subframes on a carrier corresponding to the selected main carrier and used by the macro base station;
wherein the partially blank subframe is a subframe having a control area almost not used for transmitting information, and a data area in which only a part of subcarriers can be used for transmitting data.

12. A macro base station, comprising:
a main and auxiliary carrier information receiving unit configured to receive, from a micro base station, information that indicates main carrier and auxiliary carrier used by a mobile terminal at cell edge of the micro base station; and
an auxiliary carrier setting unit configured to set limited blank subframes on a carrier corresponding to the auxiliary carrier and used by the macro base station, according to the information;
wherein the limited blank subframe is a subframe having a control area which can be used for transmitting information, and a data area in which only a part of subcarriers can be used for transmitting data.

13. The macro base station according to claim 12, further comprising:
a judging unit configured to judge whether mobile terminals at cell edge of the micro base station use a plurality of main carriers according to the information received from the micro base station;
a selecting unit configured to select one or more main carriers from the plurality of main carriers when it is judged by the judging unit that the plurality of main carriers are used by the mobile terminals at cell edge of the micro base station; and
a selected main carrier setting unit configured to set a part of subframs on the selected one or more main carriers as partially blank subframes,
the partially blank subframe is a subframe having a control area almost not used for transmitting control information, and a data area in which only a part of subcarriers can be used for transmitting data.

14. The macro base station according to claim 12, further comprising:
a transmitting unit configured to transmit configuration information of the limited blank subframe to the micro base station through a bitmap of 10 ms.

15. The macro base station according to claim 12, further comprising:
a main carrier setting unit configured to set blank subframes on a carrier corresponding to the main carrier and used by the macro base station;
the blank subframe is a subframe in which both a control area and a data area are almost not used for transmitting information.

16. The macro base station according to claim 15, wherein:
the main carrier setting unit sets all or a part of the set blank subframes as partially blank subframes,
the partially blank subframe is a subframe having a control area almost not used for transmitting control information, and a data area in which only a part of subcarriers can be used for transmitting data.

17. The macro base station according to claim 16, wherein the blank subframe and the limited blank subframe are spaced apart from each other for several subcarriers in time.

18. A mobile terminal, comprising a feedback unit configured to feed back channel quality information for limited corresponding blank subframes to a micro base station, wherein the limited corresponding blank subframe is a subframe having a control area almost not used for transmitting control information, and a data area in which only a part of subcarriers can be used for transmitting data.

19. The mobile terminal according to claim 18, wherein the feedback unit only transmits to the micro base station channel quality information for data transmission subcarriers of the limited corresponding blank subframes.

20. A communication system, comprising a macro base station and a mobile terminal, the macro base station comprising:
a main and auxiliary carrier information receiving unit configured to receive, from a micro base station, information that indicates main carrier and auxiliary carrier; and
an auxiliary carrier setting unit configured to set limited blank subframes on a carrier corresponding to the auxiliary carrier and used by the macro base station, according to the information;
wherein the limited blank subframe is a subframe having a control area which can be used for transmitting information, and a data area in which only a part of subcarriers can be used for transmitting data,
the mobile terminal comprises a communication unit which communicates using the main carrier and the auxiliary carrier at cell edge of the micro base station.
